Europäisches Patentamt

(19) European Patent Office  (11) Veröffentlichungsnummer: **0 031 914**
B1
Office européen des brevets

(12) **EUROPÄISCHE PATENTSCHRIFT**

(45) Veröffentlichungstag der Patentschrift:  (51) Int. Cl.³: **B 60 J 7/08,** B 60 J 7/10,
09.05.84  **E 04 D 13/035**

(21) Anmeldenummer: **80107708.2**

(22) Anmeldetag: **08.12.80**

(54) Ausstellbares und durchsichtiges Sonnendach für Kraftfahrzeuge.

(30) Priorität: **05.01.80 DE 3000280**  (73) Patentinhaber: **Gebr. Happich GmbH,**
**Postfach 10 02 49 Clausenbrücke 1,**
**D-5600 Wuppertal 1 (DE)**

(43) Veröffentlichungstag der Anmeldung:
**15.07.81 Patentblatt 81/28**  (72) Erfinder: **Küpper, Manfred,**
**Bernd-Rosemeyer-Strasse 22, D-5608 Radevormwald**
**(DE)**

(45) Bekanntmachung des Hinweises auf die Patenterteilung:
**09.05.84 Patentblatt 84/19**

(84) Benannte Vertragsstaaten:
**AT BE DE FR NL**

(56) Entgegenhaltungen:
**DE - A - 2 342 762**
**FR - A - 2 210 747**
**GB - A - 586 218**
**US - A - 4 106 399**

## Beschreibung

Die Erfindung betrifft ein ausstellbares und durchsichtiges Sonnendach für Kraftfahrzeuge.

Derartige bekannte, z.B. in der nicht vorveröffentlichten DE-OS 2 901 526 beschriebene Sonnendächer werden immer beliebter, insbesondere bei Personenkraftwagen, da durch diese Sonnendächer eine zugfreie Zusatzbelüftung bei gleichzeitiger Vergrösserung des Lichteinfalles in das Fahrzeug möglich ist. Gegenüber herkömmlichen Stahlschiebedächern weisen derartige ausstellbare und durchsichtige Sonnendächer in Form einer Einfachglasscheibe den Nachteil auf, dass bei starker Sonneneinstrahlung eine erhebliche Aufheizung des Fahrzeuginnenraumes auftritt und dass andererseits die Isolierwirkung der Einfachglasscheibe sehr gering ist, so dass bei niedrigen Aussentemperaturen und ohne direkte Sonneneinstrahlung eine erhebliche Abkühlung der Einfachglasscheibe und des Innenraumes eintritt. Abgesehen von der Schwierigkeit, den Innenraum dann ausreichend zu heizen, erfolgt Kondensation von Luftfeuchtigkeit an der Einfachglasscheibe mit allen damit verbundenen Unannehmlichkeiten. Anstelle einer Einfachglasscheibe eine Isolierglasdoppelscheibe zu verwenden, verbietet sich an dieser Stelle, da Isolierglasdoppelscheiben sehr dick sind und beim Einbau einen grossen Aufwand erfordern. Dies liegt daran, dass eine Isolierglasdoppelscheibe nicht durchbohrt werden kann, um eine Befestigungsmöglichkeit für Scharniere und Ausstellvorrichtungen zu schaffen. Vielmehr muss bei einer Isolierglasdoppelscheibe ein zusätzlicher Rahmen vorgesehen werden. Weiterhin muss die Rahmenanordnung für die Lagerung der Isolierglasscheibe im Dach des Fahrzeuges so ausgebildet werden, dass einsickerndes Regenwasser in einer Rinne aufgefangen werden kann und mittels Schläuchen durch Karosseriehohlräume abgeleitet werden kann. Es liegt auf der Hand, dass bei einer solchen Ausbildung eines ausstellbaren und durchsichtigen Sonnendaches ein nachträglicher Einbau mit so erheblichen Kosten verbunden ist, dass diese Lösung weder technisch noch kommerziell als brauchbar angesehen werden kann.

Der Erfindung liegt daher die Aufgabe zugrunde, ein ausstellbares und durchsichtiges Sonnendach in Form einer Einfachglasscheibe so zu verbessern, dass bei einfachem Aufbau und nachträglicher Einbaumöglichkeit mit geringem Aufwand der Effekt einer Isolierglasdoppelscheibe erreichbar ist.

Gelöst wird diese Aufgabe durch die Merkmale des Hauptanspruches. Weitere vorteilhafte Ausgestaltungen der Erfindung ergeben sich aus den Merkmalen der nachfolgenden Ansprüche.

Die erfindungsgemässe Wanne kann aus durchsichtigem oder undurchsichtigem Kunststoff hergestellt sein, ist sehr leicht und ist auf einfache Weise unterhalb der Einfachglasscheibe einklipsbar. Die Wanne gewährleistet eine ausreichende Isolierung gegen Kälte sowie gegen Hitze, wobei durch eine entsprechende reflektierende Beschichtung starke Sonneneinstrahlung erheblich gemindert werden kann. Zusätzlich kann eine Einlage aus Isolierstoff, z.B. Schaumstoff, vorgesehen werden. Kondensate an der Einfachglasscheibe des Sonnendaches werden durch die Wanne aufgefangen und können durch die Lüftungsschlitze verdunsten.

Weitere Vorteile und Einzelheiten der Erfindung ergeben sich aus der nachstehenden, anhand des in der Zeichnung dargestellten Ausführungsbeispiels gegebenen Beschreibung und es zeigt

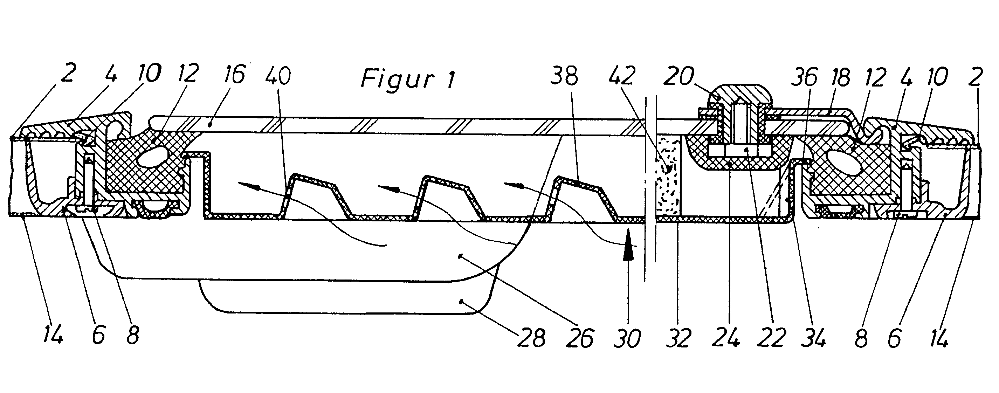

Fig. 1 einen Längsschnitt durch das Sonnendach mit an einem im Fahrzeugdach angeordneten Rahmen befestigter Wanne.

Von einem Kraftfahrzeug ist nur ein Ausschnitt eines Daches 2 gezeigt mit in einer Öffnung eingesetztem oberen Rahmenprofil 4 und dagegen mittels Schrauben 8 verschraubtem unteren Rahmenprofil 6. Ein Dichtprofil 10 ist zwischen dem oberen Rahmenprofil 4 und dem Dach 2 angeordnet, während ein zweites Dichtprofil 12 in einer Rinne des oberen Rahmenprofils 4 eingelegt ist und die Ausdichtung gegenüber einem als Einfachglasscheibe 16 ausgebildeten Sonnendach bildet. Ein Dachhimmel 14 ist gegen das untere Rahmenprofil 6 geklebt. Durch ein an der Vorderkante der Einfachglasscheibe 16 angeschraubtes Profilblech 18, das mit einer Nase unter einen entsprechenden Vorsprung des oberen Rahmenprofils 4 greift, wird ein Scharnier gebildet, welches das Ausstellen der Einfachglasscheibe 16 ermöglicht. Das Profilblech 18 ist mittels mehrerer in Nutmuttern 20 eingeschraubter Schrauben 22 mit der Einfachglasscheibe 16 verbunden. Die Köpfe der Schrauben 22 weisen Abdeckkappen 24 aus Kunststoff auf.

Im Bereich der Hinterkante der Einfachglasscheibe 16 ist eine Ausstellvorrichtung angeordnet, von der nur eine Halterung 26 und ein Drehknopf 28 angedeutet sind. Durch Drehen des Drehknopfes 28 in entsprechender Richtung kann die Einfachglasscheibe 16 nach oben ausgestellt werden oder in die gezeichnete Stellung zurückgeholt werden. Unterhalb der Einfachglasscheibe 16 ist eine flache Wanne 30 aus durchsichtigem Kunststoff angeordnet. Die Wanne 30 besteht aus einem Wannenboden 32 und einem umlaufenden Wannenrand 34 mit etwa waagerecht vorspringenden Rastnasen 36. Diese Rastnasen greifen über einen umlaufenden Rand des oberen Rahmenprofils 4 und werden dabei durch das Dichtprofil 12 rüttelfrei festgehalten.

Seitlich der Halterung 26, für die eine entsprechende Ausnehmung in der Wanne 30 vorgesehen ist, sind nach innen gerichtete Sicken 38 vorgesehen mit Lüftungsschlitzen 40, die einen Luftdurchgang bei ausgestellter Einfachglasscheibe 16 ermöglichen. In den Zwischenraum zwischen der Einfachglasscheibe 16 und dem Wannenboden 32 kann zusätzlich im Winter eine Isolierstoffeinlage 42, z.B. aus Kunststoffschaum, eingelegt werden, wodurch das Sonnendach dann zwar nicht mehr durchsichtig ist, aber eine erhebliche Isolierwirkung aufweist. Weiterhin kann die Wanne 30 mit einer reflektierenden Beschichtung versehen sein, die teildurchlässig ist und dadurch einen grossen Teil der Licht- und Wärmestrahlen bei Sonnenschein reflektiert. Die Wanne 30 dient gleichzeitig dazu, von der Einfachglasscheibe 16 abtropfendes Kondensat aufzufangen, so dass es nicht in den Fahrgastraum gelangen kann. Zu diesem Zweck sind die Lüftungsschlitze 40 in den Sicken 38 erhöht gegenüber dem Wannenboden 32 angeordnet, damit das Kondensat nicht durch diese Schlitze 40 in den Fahrgastraum gelangen kann. Weiterhin verhindert die Wanne 30, dass Regenwasser in den Fahrgastraum gelangen kann, falls die Einfachglasscheibe 16 bei Regenwetter versehentlich offen geblieben ist.

## Patentansprüche

1. Ausstellbares Sonnendach mit einer durchsichtigen Einfachglasscheibe (16) für Kraftfahrzeuge, dadurch gekennzeichnet, dass unterhalb der Einfachglasscheibe (16) eine flache Wanne (30) mit im wesentlichen gleichen Abmessungen, deren Boden (32) einen Abstand zur Einfachglasscheibe (16) bildet, einklipsbar angeordnet ist.

2. Sonnendach nach Patentanspruch 1, dadurch gekennzeichnet, dass die Wanne (30) mit ihren Rändern (34) an einem im Fahrzeugdach (2) angeordneten Rahmen (4, 6) einklipsbar befestigt ist.

3. Sonnendach nach Patentanspruch 2, gekennzeichnet durch etwa waagerecht vorspringende Rastnasen (36) an den Rändern (34) der Wanne (30) und entsprechende Rastungen am Rahmen (4).

4. Sonnendach nach einem oder mehreren der Patentansprüche 1 bis 3, gekennzeichnet durch eine Isolierstoffeinlage (42) zwischen der Einfachglasscheibe (16) und der Wanne (30).

5. Sonnendach nach einem oder mehreren der Patentansprüche 1 bis 4, gekennzeichnet durch eine reflektierende Beschichtung der Wanne (30).

6. Sonnendach nach einem oder mehreren der Patentansprüche 1 bis 5, gekennzeichnet durch Lüftungsschlitze (40) in der Wanne (30).

7. Sonnendach nach Patentanspruch 6, gekennzeichnet durch als zur Einfachglasscheibe (16) gerichtete Sicken (38) ausgebildete, mit Abstand zum Wannenboden (32) angeordnete Lüftungsschlitze (40).

## Claims

1. An outwardly tiltable sun roof for a motor vehicle, the sun roof comprising a single pane (16) of glass, characterized in that a shallow click-fastenable trough (30) of substantially the same dimensions as the glass pane (16) is arranged below said pane, and in that the bottom (32) of the trough is spaced from the glass pane (16).

2. A sun roof according to claim 1, characterized in that the trough (30) is click-fastenably securable by its skirting walls (34) to a frame (4, 6) mounted in the vehicle roof (2).

3. A sun roof according to claim 2, characterized by latches (36) projecting substantially horizontally from the skirting walls (34) of the trough (30) and by suitable catches on the frame (4).

4. A sun roof according to any one or more of the claims 1 to 3, characterized by an insulating insert (42) between the single pane (16) of glass and the trough (30).

5. A sun roof according to any one or more of the claims 1 to 4, characterized by a reflecting coating on the trough (30).

6. A sun roof according to any one or more of the claims 1 to 5, characterized by vent holes (40) in the trough (30).

7. A sun roof according to claim 6, characterized in that the vent holes (40) are arranged at a distance from the bottom (32) of the trough in corrugations (38) extending in the direction of the single pane (16) of glass.

## Revendications

1. Volet de toit pivotant à plaque de verre unique et transparente (16) pour véhicules, caractérisé en ce qu'une cuvette plate (30) peut être emboîtée au-dessous de la plaque de verre unique (16), dont les dimensions sont sensiblement égales et dont le fond (32) forme un espace avec la plaque de verre unique (16).

2. Volet de toit selon la revendication 1, caractérisé en ce que l'on peut fixer la cuvette (30) en insérant ses bords (34) dans un cadre (4, 6) monté dans le toit du véhicule.

3. Volet de toit selon la revendication 2, caractérisé par des nez d'arrêt (36) en saillie et sensiblement horizontaux prévus sur les bords (34) de la cuvette (30) et par des positions d'arrêt correspondantes prévues dans le cadre (4).

4. Volet de toit selon l'une ou plusieurs des revendications 1 à 3, caractérisé par une garniture de matière isolante (42) disposée entre la plaque de verre unique (16) et la cuvette (30).

5. Volet de toit selon l'une ou plusieurs des revendications 1 à 4, caractérisé par une couche réfléchissante appliquée sur la cuvette (30).

6. Volet de toit selon l'une ou plusieurs des revendications 1 à 5, caractérisé par des fentes d'aération (40) prévues dans la cuvette (30).

7. Volet de toit selon la revendication 6, caractérisé par des fentes d'aération (40) constituées dans des moulures (38) dirigées vers la plaque de verre unique (16) et disposées à une certaine distance du fond (32) de la cuvette.

Figur 1